# FASCICULE DE BREVET EUROPEEN

(11) **EP 0 720 181 B1**
(45) Date de publication et mention de la délivrance du brevet: **08.07.1998**
(21) Numéro de dépôt: 95402663.9
(22) Date de dépôt: 27.11.1995
(51) Int. Cl.: H01B 17/38, H01B 19/00

(54) **Isolateur électrique, procédé de fabrication d'un tel isolateur et dispositif pour la mise en oeuvre du procédé**
Elektrischer Isolator, Verfahren zu dessen Herstellung und Vorrichtung zur Durchführung des Verfahrens
Electrical insulator, manufacturing method of such an insulator and device for carrying out the method

(30) Priorité: 30.11.1994 FR 9414378
(43) Date de publication de la demande: 03.07.1996
(73) Titulaire: SEDIVER, SOCIETE EUROPEENNE D'ISOLATEURS EN VERRE ET COMPOSITE, F-92017 Nanterre Cédex (FR)
(72) Inventeur: Levillain, Roger, F-03270 St Yorre (FR); Bourdier, Gilles, F-63310 Randan (FR)
(74) Mandataire: Prugneau, Philippe

(56) Documents cités:
- EP-A- 0 121 133
- EP-A- 0 613 156

## Description

L'invention porte sur un isolateur électrique du genre de ceux utilisés dans les installations haute tension pour servir de support d'appareillages ou de conducteurs ou d'enveloppe d'appareillages ou de traversées.

Un tel isolateur électrique est connu du brevet US-4802731. Il comprend une paire de ferrures en un alliage métallique notamment à base d'aluminium, fixées aux extrémités correspondantes d'un support servant d'ossature et ayant une surface extérieure de forme généralement cylindrique, tronconique ou autre forme de révolution. Les ferrures servent d'éléments d'ancrage pour l'isolateur. Le support est fabriqué en un matériau composite isolant électriquement, par exemple par enroulement de fibres organiques ou minérales, comme la fibre de verre, agglomérées avec une résine synthétique durcissable, comme une résine époxyde.

Cet isolateur comprend encore une isolation en matière élastomère qui revêt en partie la surface extérieure du support et en partie la surface extérieure de chaque ferrure pour former des ailettes annulaires qui servent à augmenter la ligne de fuite de l'isolateur. En raison de son degré de résistance supérieur et de son poids inférieur, ce type d'isolateur remplace progressivement les isolateurs traditionnels fabriqués en porcelaine.

Chaque extrémité du support de l'isolateur est insérée à l'intérieur d'un logement en forme de tuyère prévu dans une ferrure correspondante de l'isolateur, la ferrure étant fixée au support par collage/frettage par exemple. Du fait de cet assemblage ferrure/support, le diamètre extérieur de la ferrure au niveau de l'ouverture du logement par où s'insère l'extrémité du support est nécessairement plus grand que le diamètre extérieur du support au niveau de cette ouverture.

Il est primordial d'éviter les inclusions d'air entre la surface extérieure du support et l'isolation en matière élastomère ou entre la partie de surface extérieure de chaque ferrure et cette isolation car ces inclusions d'air sont la cause de décharges électriques incandescentes. Ces inclusions d'air sont aussi à l'origine de la déformation de l'isolation en matière élastomère lors de sa vulcanisation. Or cette isolation en matière élastomère est généralement appliquée sur la surface extérieure du support et des ferrures suivant le principe de l'enroulement en hélice d'une bande profilée en matière élastomère. Il en résulte que si la différence de diamètre entre la ferrure et le support au niveau de l'ouverture du logement dans la ferrure est très importante, il ne semble pas possible d'appliquer la technique de l'enroulement d'une bande profilée en matière élastomère pour constituer l'isolation tout en évitant les inclusions d'air au niveau de l'ouverture du logement. Selon le document précité US-4802731, il est prévu, comme visible sur la figure 5 de ce document, au niveau de chaque ferrure, une surface de transition de forme tronconique permettant d'obtenir une réduction de diamètre progressive depuis la ferrure vers le support. Cette surface tronconique joint donc la surface extérieure de la ferrure et la surface extérieure du support. Toutefois, cette surface tronconique est définie par un chanfrein tronconique faisant partie de la ferrure, ce chanfrein étant obtenu par usinage de cette dernière.

L'usinage d'une ferrure pour obtenir un chanfrein tronconique avec un état de surface adéquate pour l'application de la bande profilée constituant l'isolation est une opération coûteuse car nécessairement précise. En outre, du fait que l'extrémité chanfreinée de chaque ferrure est anguleuse, cette extrémité constitue un support à la création de champs électriques particulièrement intenses lorsque l'isolateur électrique est en service ou lorsqu'il subit des chocs électriques dus à la foudre ce qui nuit aux qualités d'isolation de l'isolateur et augmente les risques de décharges incandescentes.

Le but de l'invention est de remédier à ces inconvénients.

En particulier un but de l'invention est de proposer un isolateur électrique présentant une très bonne étanchéité de l'isolation dans la zone de transition ferrure/support sans présence d'air dans cette zone de transition.

Un autre but de l'invention est de proposer un isolateur électrique ayant des ferrures agencées pour limiter le niveau du champ électrique qui se crée à l'intérieur de l'isolateur de façon à ralentir le vieillissement des matériaux constituant cet isolateur.

Un autre but de l'invention est de proposer un isolateur électrique facile à fabriquer.

Ces buts sont atteints par un isolateur électrique tel que défini par la revendication 1. L'invention s'étend à un procédé de fabrication d'un tel isolateur et à un dispositif de mise en oeuvre d'un tel procédé.

Un mode de réalisation de l'invention est maintenant décrit en référence aux dessins.

La figure 1 montre schématiquement un dispositif pour la mise en oeuvre du procédé selon l'invention.

La figure 2 montre plus en détail l'assemblage ferrure-support.

la figure 3 est une vue en coupe suivant III-III de la figure 2.

La figure 4 montre le détail IV de la figure 2.

La figure 5 illustre l'enroulement en hélice d'une bande profilée en matière élastomère autour du support pour constituer l'isolation sous forme d'ailettes annulaires.

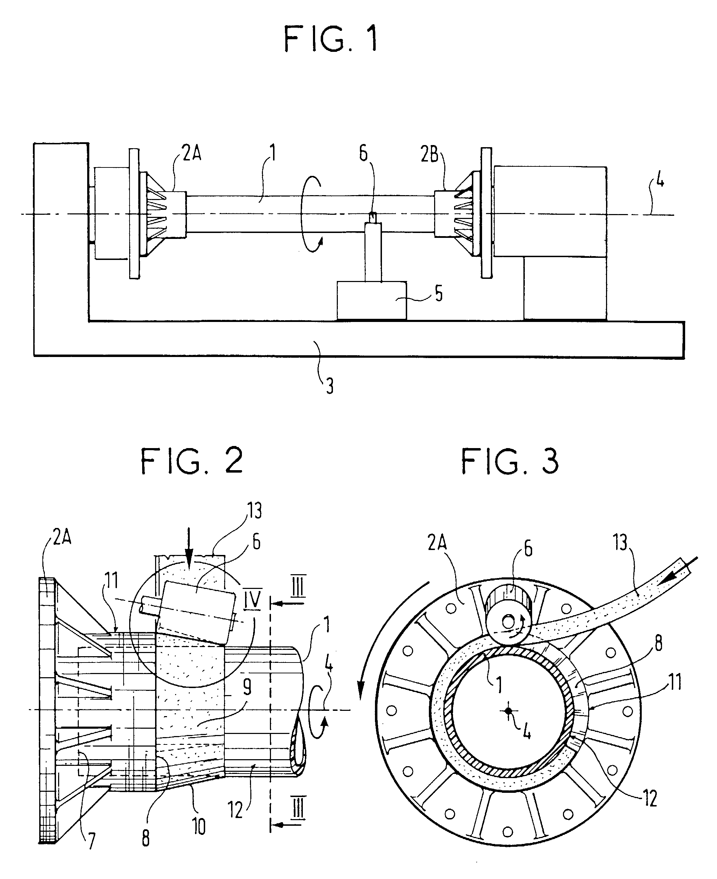

Figure 1, un insert constitué du support 1 en matériau composite et deux ferrures 2A et 2B fixées aux extrémités du support est tenu entre les mors d'un tour 3 suivant une position axiale sensiblement horizontale. Le tour 3 sert aussi à faire tourner l'insert autour de l'axe longitudinal 4 du support.

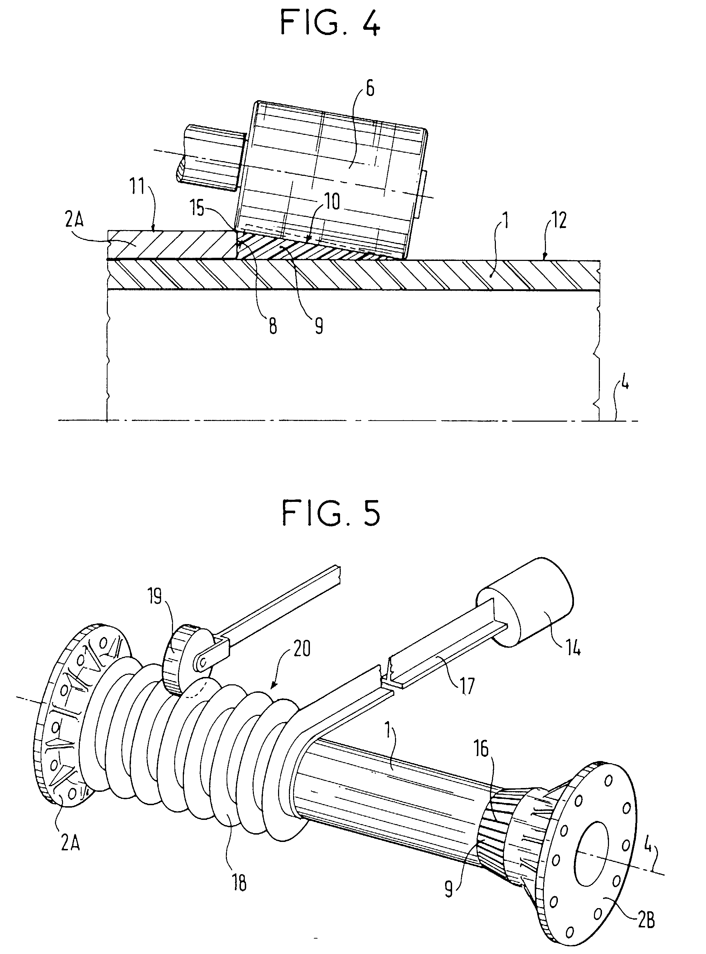

Le tour 3 est installé à proximité d'un banc d'extrusion 14 (visible figure 5) de matière élastomère comme du silicone, du caoutchouc éthylène-propylène ou analogue. A noter que le tour 3 est monté mobile suivant l'axe 4 par rapport au banc d'extrusion 14 pour permettre, comme décrit par la suite, notamment l'enroulement en hélice d'une bande profilée en matière élastomère constituant les ailettes annulaires de l'isolateur. Par ailleurs, il est prévu un système de roulage 5 par galet rotatif 6 apte à être déplacé latéralement suivant l'axe 4 par rapport au tour 3.

La figure 2 montre l'assemblage de la ferrure 2A avec une extrémité du support 1, l'assemblage de la ferrure 2B avec l'autre extrémité du support étant analogue. Le support 1 a ici une forme cylindrique. L'extrémité du cylindre est insérée dans un logement 7 en forme de tuyère (montré en traits interrompus) prévu dans la ferrure 2A.

Selon l'invention, la ferrure 2A présente, sur sa face par où s'introduit l'extrémité du support, un épaulement annulaire 8 qui a une forme arrondie suivant une coupe longitudinal de l'insert comme visible sur la figure 4. Cette forme arrondie permet de limiter l'intensité des champs électriques qui se développent dans l'isolateur à l'extrémité des ferrures ce qui contribue à augmenter la durée de vie de l'isolateur.

Comme visible figure 2, le diamètre extérieur de la ferrure 2A au niveau de l'épaulement 8 est plus grand que le diamètre extérieur du support cylindrique à cet endroit et la hauteur de l'épaulement est de l'ordre de 1 à 2 centimètres. Selon l'invention, on forme une bague tronconique en matière élastomère 9 qui est adossée à l'épaulement 8, cette bague 9 formant une surface de transition tronconique 10 qui joint la surface extérieure 11 de la ferrure 2A et la surface extérieure 12 du support de sorte à obtenir une réduction progressive du diamètre de l'insert dans la zone de transition au niveau de l'épaulement 8.

Selon l'invention, chaque bague tronconique adossée à l'épaulement 8 d'une ferrure comme 2A est formée à partir d'une bande profilée en matière élastomère telle que 13 montrée figure 3. Plus particulièrement, selon l'invention, on place une première filière sur le nez porte filière du banc d'extrusion 14 pour obtenir deux premières bandes profilées 13 en matière élastomère à section sensiblement triangulaire et de longueur à peine supérieure à la circonférence du support 1 au niveau de chaque épaulement 8. Ensuite, on déplace l'insert par rapport au système de roulage 5 de telle façon que le galet 6 monté en rotation sur un bras du système de roulage appuie à la fois sur le bord 15 de l'épaulement d'une des deux ferrures et sur le support 1 comme visible sur la figure 4. Sur cette figure, l'espace laissé libre entre le galet 6, le support 1 et l'épaulement 8 défini la section de la bague 9 après l'opération de roulage, la section de la bande profilée 13 avant l'opération de roulage étant montrée en traits interrompus.

Figure 3, l'insert est maintenant entraîné en rotation autour de l'axe 4 et une extrémité d'une bande profilée 13, mise en place au ras de la ferrure 2A, s'engage sous le galet 6 qui écrase la bande 13, laquelle s'enroule circulairement autour du support 1 en étant guidée au plus près de l'épaulement 8. L'excès de longueur de la bande profilée 13 est ensuite enlevé par une découpe appropriée de la bande pour obtenir la bague tronconique 9 comme montrée figure 5 pour la ferrure 2B. A noter que le roulage de la bande profilée 13 permet d'éviter les inclusions d'air dans la zone de transition indiquée ci-dessus puisque la matière élastomère de la bande 13 remplit complètement l'espace laissé libre entre le galet 6, le support 1 et l'épaulement 8 visible figure 4.

Les deux bagues tronconiques étant maintenant posées sur l'insert, on forme sur la surface extérieure tronconique 10 de chaque bague tronconique 9, des rainures 16 profondes d'environ 0,5 millimètre qui s'étendent latéralement à l'axe 4 comme visible figure 5.

L'insert est maintenant prêt à recevoir une isolation en matière élastomère qui sert à augmenter sa ligne de fuite. Plus particulièrement, on place sur le nez porte filière du banc d'extrusion 14 une seconde filière pour obtenir une seconde bande profilée 17 montrée figure 5 dont la section a ici la forme d'un T renversé. Alors que l'insert est entraîné en rotation sur le tour 3 et déplacé en translation par rapport au banc d'extrusion 14, la bande profilée 17 est enroulée en hélice pour recouvrir une partie de la surface extérieure 11 de chaque ferrure, les surfaces tronconiques 10 et la surface extérieure 12 du support afin de constituer des ailettes annulaires jointives telles que 18 qui saillent à partir du support 1 comme visible figure 5.

Selon l'invention, la matière élastomère de la bande 17 est de même composition que la matière élastomère des bagues 9 ce qui simplifie la fabrication de l'isolateur.

Selon l'invention, pendant que la bande profilée 17 est enroulée en hélice autour du support, on exerce une pression, avec un galet de roulage 19 (généralement différent du galet 6) monté sur le système de roulage 5, entre les ailettes annulaires déjà constituées autour du support de façon à plaquer convenablement la bande 17 contre le support, les ferrures et les bagues tronconiques tout en éliminant les inclusions d'air. A noter que les rainures 16 prévues sur la surface extérieure des bagues tronconiques 9 contribuent à l'élimination de telles inclusions d'air, l'air s'échappant le long de ces rainures. Par ailleurs, pendant cette opération de roulage, un doigt (non représenté) monté sur le bras support du galet 19 incline chaque ailette annulaire suivant un angle choisi par rapport à l'axe 4. L'inclinaison des ailettes annulaires améliore l'écoulement de l'eau sur la surface de l'isolation et par conséquent contribue à l'amélioration du comportement électrique de l'isolateur soumis à la pluie par exemple.

Enfin, l'insert revêtu de l'isolation en matière élastomère 20 est ensuite placé en étuve pour obtenir la vulcanisation de la matière élastomère de l'isolation 20 et des bagues 9. Pendant la vulcanisation, l'isolateur est entraîné en rotation autour de son axe 4 pour éviter la déformation des ailettes annulaires éventuellement inclinées par rapport à l'axe 4.

Ainsi, grâce à cette technique de fabrication d'un isolateur électrique, on évite toute inclusion d'air et on obtient une parfaite étanchéité de l'isolateur à l'humidité au niveau de l'assemblage ferrure-support tout en minimisant l'intensité des champs électriques qui se créent dans la structure de l'isolateur électrique, ce qui contribue à améliorer sa fiabilité, à assurer une étanchéité parfaite et à augmenter la ligne de fuite et la ligne d'arc de l'isolateur.

## Revendications

1. Un isolateur électrique pour installations haute tension, comprenant un support (1) en matériau composite dont chaque extrémité est insérée dans une partie de ferrure (2A,2B) en forme de tuyère (7) et, une isolation (20) formant des ailettes annulaires (18) fixée sur la surface extérieure du support et des tuyères de ferrure par enroulement en hélice d'une bande profilée (17) en matière élastomère, caractérisé par une bague (9) en matière élastomère fixée sur la surface extérieure du support et adossée contre la face d'extrémité (8) d'une tuyère de ferrure correspondante par où est insérée une extrémité du support, chaque bague définissant une surface tronconique de transition pour la fixation de l'isolation entre la surface extérieure de la tuyère de ferrure correspondante et la surface extérieure du support.

2. L'isolateur selon la revendication 1, dans lequel la face d'extrémité (8) de chaque tuyère de ferrure présente une forme arrondie suivant une coupe longitudinale du support (1).

3. L'isolateur selon l'une des revendications 1 ou 2, dans lequel la matière élastomère de la bague tronconique (9) est de même composition que la matière élastomère de l'isolation (20).

4. Un procédé de fabrication d'un isolateur électrique selon l'une des revendications 1 à 3, caractérisé par le fait que chaque bague (9) en matière élastomère est fixée sur le support par enroulement d'une bande profilée (13) en matière élastomère venue par extrusion et ayant une section sensiblement triangulaire.

5. Le procédé selon la revendication 4, dans lequel la bande profilée en matière élastomère (13) constituant la bague (9) est écrasée à l'aide d'un galet de roulage (6) en appui sur le bord de la face d'extrémité (8) de la tuyère de ferrure correspondante et sur la surface extérieure du support.

6. Le procédé selon la revendication 5, dans lequel on écrase la bande profilée (13) constituant la bague (9) avec le galet de roulage (6) pendant que le support (1) est entraîné en rotation autour de son axe longitudinal (4).

7. Le procédé selon les revendications 4 ou 5, dans lequel on forme des rainures (16) sur la surface tronconique de la bague (9) avant d'enrouler en hélice la bande profilée en matière élastomère (17) constituant l'isolation (20) autour du support, ces rainures s'étendant latéralement suivant l'axe du support.

8. Le procédé selon la revendication 7, dans lequel on plaque l'isolation (20) contre la surface extérieure des tuyères de ferrure, la surface tronconique des bagues et la surface extérieure du support en faisant passer un galet de roulage (19) entre les ailettes annulaires (18).

9. Le procédé selon la revendication 8, dans lequel on incline chaque ailette annulaire (18) suivant un certain angle par rapport à l'axe (4) du support en même temps qu'on fait passer le galet de roulage (19) entre les ailettes annulaires.

10. Un dispositif pour la mise en oeuvre d'un procédé selon l'une des revendications 4 à 9, comprenant une machine outil (3) pour tenir le support équipé de ses ferrures selon une position axiale sensiblement horizontale et le faire tourner autour de son axe (4), une extrudeuse (14) apte à fournir d'une part une première bande profilée (13) en matière élastomère ayant une section sensiblement triangulaire et d'autre part une seconde bande profilée (17) en matière élastomère ayant une section transversale sensiblement en forme de T, et un système de roulage (5) à galets rotatifs (6;19) monté pour venir exercer une pression sur le support.

## Patentansprüche

1. Elektrischer Isolator für Hochspannungsanlagen mit einem Träger (1) aus Verbundmaterial, der mit jedem seiner Enden in einem Endarmaturenbereich (2A, 2B) mit einem Sackloch (7) steckt, und mit einer Isolierung (20), die ringförmige Rippen (18) bildet und auf der äußeren Oberfläche des Trägers und der Endarmaturen in Form eines spiralförmig gewickelten Profilbands (17) aus Elastomermaterial befestigt ist, gekennzeichnet durch einen Ring (9) aus Elastomermaterial, der auf der äußeren Oberfläche des Trägers befestigt und an der Stirnseite (8) einer entsprechenden Endarmatur anliegt, durch die ein Ende des Trägers eingesteckt ist, wobei jeder Ring eine kegelstumpfförmige Übergangsfläche zur Befestigung der Isolierung zwischen der äußeren Oberfläche der entsprechenden Endarmatur und der äußeren Oberfläche des Trägers definiert.

2. Isolator nach Anspruch 1, bei dem die Stirnseite (8) jeder Endarmatur gemäß einem Längsschnitt des Trägers eine abgerundete Form bildet.

3. Isolator nach einem der Ansprüche 1 und 2, bei dem das Elastomermaterial des kegelstumpfförmigen Rings (9) die gleiche Zusammensetzung wie das Elastomermaterial der Isolierung (20) hat.

4. Verfahren zur Herstellung eines elektrischen Isolators nach einem der Ansprüche 1 bis 3, dadurch gekennzeichnet, daß jeder Ring (9) aus Elastomermaterial auf dem Träger durch Aufwickeln eines Profilbands (13) aus Elastomermaterial befestigt wird, das durch Extrudieren erzeugt wird und einen im wesentlichen dreieckigen Querschnitt besitzt.

5. Verfahren nach Anspruch 4, bei dem das Profilband (13) des Rings (9) aus Elastomermaterial mithilfe einer Walzrolle (6) verformt wird, die auf dem Rand der Stirnseite (8) der entsprechenden Endarmatur und auf der äußeren Oberfläche des Trägers aufliegt.

6. Verfahren nach Anspruch 5, bei dem das Profilband (13) des Rings (9) von der Walzrolle (6) verformt wird, während der Träger (1) sich um seine Längsachse (4) dreht.

7. Verfahren nach Anspruch 4 oder 5, bei dem Rillen (16) in der kegelstumpfförmigen Oberfläche des Rings (9) ausgebildet werden, ehe das Profilband (17) aus Elastomermaterial aufgebracht wird, das die Isolierung (20) um den Träger herum bildet, wobei diese Rillen sich seitlich gemäß der Achse des Trägers erstrecken.

8. Verfahren nach Anspruch 7, bei dem die Isolierung (20) gegen die äußere Oberfläche der Endarmaturen, gegen die kegelstumpfförmige Oberfläche der Ringe und gegen die äußere Oberfläche des Trägers angedrückt wird, indem eine Walzrolle (19) zwischen den ringförmigen Rippen (18) durchläuft.

9. Verfahren ach Anspruch 8, bei dem jede ringförmige Rippe (18) um einen bestimmten Winkel bezüglich der Achse (4) des Trägers geneigt wird, während gleichzeitig die Rolle (19) zwischen den ringförmigen Rippen durchläuft.

10. Vorrichtung zur Durchführung eines Verfahrens nach einem der Ansprüche 4 bis 9 mithilfe einer Werkzeugmaschine (3), die den mit den Endarmaturen versehenen Träger in einer im wesentlichen waagrechten axialen Position hält und um seine Achse (4) dreht, mit einer Extrudiervorrichtung (14), die einerseits ein erstes Profilband (13) aus Elastomermaterial mit einem im wesentlichen dreieckigen Querschnitt und andrerseits ein zweites Profilband (17) aus Elastomermaterial mit einem Querschnitt im wesentlichen in Form eines auf dem Kopf stehenden Buchstabens T liefern kann, und mit einem Walzsystem (6, 19, 5) mit drehbaren Rollen, das so montiert ist, daß es einen Druck auf den Träger ausüben kann.

## Claims

1. An electrical insulator for high tension installations, the insulator comprising a support (1) of composite material having each of its ends inserted in a portion of a nozzle-shaped endpiece (2A, 2B) together with insulation (20) forming annular fins (18) fixed on the outside surface of the support and of the nozzles of the endpieces by helically winding a shaped strip (17) of elastomer material, the insulator being characterized by a ring (9) of elastomer material fixed to the outside surface of the support and backed up against the end face (8) of a corresponding endpiece nozzle through which an end of the support is inserted, each ring defining a tapering transition surface onto which the insulation is fixed between the outside surface of the corresponding endpiece nozzle and the outside surface of the support.

2. The insulator of claim 1, in which the end face (8) of each endpiece nozzle is rounded in shape in a longitudinal section of the support (1).

3. The insulator of claim 1 or 2, in which the elastomer material of the tapering ring (9) is of the same composition as the elastomer material of the insulation (20).

4. A method of manufacturing an electrical insulator according to any one of claims 1 to 3, characterized by the fact that each ring (9) of elastomer material is fixed on the support by winding a shaped strip of elastomer material (13) that is made by extrusion and that is substantially triangular in section.

5. The method of claim 4, in which the shaped strip of elastomer material (13) constituting the ring (9) is pressed down by means of a rolling wheel (6) bearing against the edge of the end face (8) of the corresponding endpiece nozzle and against the outside surface of the support.

6. The method of claim 5, in which the shaped strip (13) constituting the ring (9) is pressed down by the rolling wheel (6) while the support (1) is rotated about its longitudinal axis (4).

7. The method according to claim 4 or 5, in which grooves (16) are formed in the tapering surface of the ring (9) prior to helically winding the shaped strip of elastomer material (17) that constitutes the insulation (20) around the support, said grooves lying in planes that contain the axis of the support.

8. The method according to claim 7, in which the insulation (20) is pressed against the outside surface of the endpiece nozzles, the tapering surface of the rings, and the outside surface of the support by causing a rolling wheel (19) to pass between the annular fins (18).

9. The method of claim 8, in which each annular fin (18) is caused to slope at a certain angle relative to the axis (4) of the support at the same time as the rolling wheel (19) is passed between the annular fins.

10. Apparatus for implementing a method according to any one of claims 4 to 9, comprising a machinetool (3) for holding the support fitted with its endpieces in a substantially horizontal axial position and for rotating it about its axis (4), an extruder (14) suitable for supplying both a first shaped strip (13) of elastomer material of substantially triangular section and a second shaped strip (17) of elastomer material of substantially T-shaped cross-section, and a rotary wheel rolling system (5) mounted to exert pressure on the support.
